# EUROPÄISCHE PATENTSCHRIFT

(11) **EP 2 910 445 B1**
(45) Veröffentlichungstag und Bekanntmachung des Hinweises auf die Patenterteilung: **08.04.2020**
(21) Anmeldenummer: 15154263.6
(22) Anmeldetag: 09.02.2015
(51) Int. Cl.: B60W 50/14, B60W 30/095

(54) **Verfahren zum Unterstützen eines Fahrers bei der Passage einer Fahrwegverengung und Fahrerassistenzsystem dafür**
Method for supporting a driver when passing through a narrowing path and driver assistance system
Procédé d'assistance d'un conducteur pour passer dans une voie de circulation rétrécie et système d'assistance du conducteur

(30) Priorität: 25.02.2014 DE 102014203353
(43) Veröffentlichungstag der Anmeldung: 26.08.2015
(73) Patentinhaber: Volkswagen Aktiengesellschaft, 38440 Wolfsburg (DE)
(72) Erfinder: Petermann-Stock, Ina, 38448 Wolfsburg (DE); Johannes, Rhede, 10557 Berlin (DE); Stephan, Amelie, 38118 Braunschweig (DE)

(56) Entgegenhaltungen:
- DE-A1-102006 041 651
- DE-A1-102008 018 512
- DE-A1-102010 043 033
- US-B1- 8 473 144

## Beschreibung

Die vorliegende Erfindung betrifft ein Verfahren zum Unterstützen eines Fahrers eines Fahrzeugs bei der Passage einer Fahrwegverengung. Ferner betrifft die Erfindung ein Fahrerassistenzsystem zum Unterstützen eines Fahrers eines Fahrzeugs bei der Passage einer Fahrwegverengung mit einer Sensoreinheit, mit der die Fahrwegverengung in Fahrtrichtung des Fahrzeugs erfassbar ist.

Aus der DE 10 2006 041 651 A1 ist ein Verfahren zur Ermittlung der Passierfähigkeit eines Fahrzeugs durch einen Fahrbahnengpass und ein Fahrerassistenzsystem hierfür bekannt. Bei diesem Verfahren wird auf einer Anzeige der Engpass dargestellt. Ferner wird in der Bildebene sowie im Größenmaßstab des Engpasses ein Fahrzeugabbild dargestellt. Durch Vergleich des Engpasses und des Fahrzeugabbildes kann der Fahrer feststellen, ob das Fahrzeug den Engpass schadenfrei passieren kann.

Aus der DE 10 2005 062 151 ist ein Verfahren und eine Vorrichtung zur Unterstützung eines Fahrzeugführers bei der Passage von Fahrwegverengungen bekannt. Bei dem Verfahren werden mittels einer Kamera Bilddaten von dem in Fahrtrichtung vor dem Fahrzeug befindlichen Verkehrsumfeld erfasst. Anhand dieser Bilddaten kann unter anderem eine Fahrbahnverengung erkannt werden. In Kenntnis der Abmessungen des Fahrzeugs wird dann festgestellt, ob und mit welcher Sicherheit die Fahrwegverengung kollisionsfrei passiert werden kann. Ausgehend von augenblicklichen Fahrzeugparametern werden zukünftige Positionen des Fahrzeugs geschätzt und dem Fahrzeugführer den Kamerabilddaten überlagert dargestellt.

Aus der US 8 473 144 B1 ist ein Verfahren und eine Vorrichtung zur Unterstützung eines Fahrzeugführers bei der Passage von Fahrwegverengungen bekannt. Bei diesem Verfahren wird zwischen statischen und dynamischen Begrenzungen unterschieden.

Der vorliegenden Erfindung liegt die Aufgabe zugrunde, ein Verfahren und ein Fahrerassistenzsystem der eingangs genannten Art bereitzustellen, welche die Unterstützung des Fahrers bei der Passage der Fahrwegverengung weiter verbessert.

Erfindungsgemäß wird diese Aufgabe durch ein Verfahren mit den Merkmalen des Anspruchs 1 und ein Fahrerassistenzsystem mit den Merkmalen des Anspruchs 13 gelöst. Vorteilhafte Ausgestaltungen und Weiterbildungen ergeben sich aus den abhängigen Ansprüchen.

Bei dem erfindungsgemäßen Verfahren wird mittels einer Sensoreinheit eine Fahrwegverengung in Fahrtrichtung des Fahrzeugs erfasst. Die Fahrwegverengung wird kategorisiert. Dabei wird einer Fahrwegverengung eine erste Kategorie zugeordnet, wenn sie nur statische Begrenzungen umfasst. Ihr wird hingegen eine zweite Kategorie zugeordnet, wenn sie dynamische Begrenzungen umfasst. Bei dem erfindungsgemäßen Verfahren wird während des Annäherns an die Fahrwegverengung und/oder während der Passage der Fahrwegverengung zum Unterstützen des Fahrers im Fahrzeug ein erstes graphisches Element für die Fahrwegverengung und relativ dazu ein zweites graphisches Element für das Fahrzeug angezeigt, wobei sich die Art der Darstellung des ersten und/oder zweiten graphischen Elements in Abhängigkeit von der Kategorie der erfassten Fahrwegverengung unterscheidet. Unter einer dynamischen Begrenzung einer Fahrwegverengung wird in dieser Schrift verstanden, dass sich die Position der Begrenzung während des Annäherns des Fahrzeugs an die Fahrwegverengung und/oder während der Passage der Fahrwegverengung verändert.

Im Zuge der Weiterentwicklung von Fahrerassistenzsystemen ergibt sich das Bedürfnis den Fahrer bei Fahrwegverengungen kontinuierlich zu unterstützen. Diese Unterstützung ist bei Fahrwegverengungen auf Autobahnen, beispielsweise bei Baustellen, oder im Stadtverkehr wichtig. Eine besondere Bedeutung hat hierbei die kontinuierliche Querführung im fließenden Verkehr, um den Fahrer beim Durchfahren von Engstellen, bei der Vorbeifahrt an Fahrzeugkolonnen in Nachbarfahrspuren, an stehenden Hindernissen oder parkenden Fahrzeugen zu unterstützen. Zudem sollte der Fahrer gewarnt werden, wenn die Fahrwegverengung zu schmal für eine Durchfahrt ist. Die Unterstützung des Fahrers kann dabei sowohl in der teilautomatisierenden Führung des Fahrzeugs als auch in einer unterstützenden Darstellung der Fahrzeugumgebung liegen. Hierbei ist es wichtig dem Fahrer die Systemzustände zu visualisieren, damit er Vertrauen in die Assistenzfunktionen aufbaut. Es hat sich herausgestellt, dass es bei einer Fahrwegverengung in Fahrtrichtung des Fahrzeugs von besonderer Bedeutung ist, ob der Fahrweg von statischen oder dynamischen Begrenzungen gebildet wird. Bei dem erfindungsgemäßen Verfahren wird dieser Unterschied der Fahrwegverengung erfasst, so dass die Fahrwegverengung unterschiedlich kategorisiert werden kann.

Die Darstellung der Fahrwegverengung zum Unterstützen des Fahrers erfolgt dann in Abhängigkeit von der Kategorie, das heißt in Abhängigkeit davon, ob die Fahrwegverengung statische oder ggf. zusätzlich auch dynamische Begrenzungen umfasst. Vorteilhafterweise kann der Fahrer auf diese Weise schnell und intuitiv erfassen, ob die Fahrwegverengung dynamische Begrenzungen umfasst, welche eine besondere Aufmerksamkeit beim Passieren der Fahrwegverengung erfordern. Auf diese Weise kann der Fahrer bei der Passage der Fahrwegverengung durch das erfindungsgemäße Verfahren unterstützt werden.

Gemäß einer Weiterbildung des erfindungsgemäßen Verfahrens wird mittels der Sensoreinheit die Durchfahrtsbreite der Fahrwegverengung bestimmt. Mittels des ersten und zweiten graphischen Elements wird die Durchfahrtsbreite der Fahrwegverengung relativ zum Fahrzeug dargestellt. Beispielsweise kann das Verhältnis der vom ersten graphischen Element dargestellten Durchgangsbreite der Fahrwegverengung zu der von dem zweiten graphischen Element dargestellten Breite des Fahrzeugs dem tatsächlichen Verhältnis der Durchfahrtsbreite der Fahrwegverengung zu der Breite des Fahrzeugs entsprechen. Auf diese Weise wird dem Fahrer des Fahrzeugs maßstabsgetreu die Breite des eigenen Fahrzeugs relativ zu der Durchfahrtsbreite der Fahrwegverengung visualisiert. Vorteilhafterweise wird hierdurch der Fahrer bei Passage der Fahrwegverengung unterstützt.

Gemäß einer Weiterbildung des erfindungsgemäßen Verfahrens werden bei einer Fahrwegverengung der ersten Kategorie einseitig oder beidseitig des Fahrwegs statische Begrenzungen erfasst, welche den Fahrweg verengen. Das erste und zweite graphische Element werden dann so dargestellt, dass die Entfernung des Fahrzeugs von dem Beginn der Fahrwegverengung und die Querposition des Fahrzeugs relativ zu den statischen Begrenzungen der Fahrwegverengung erkennbar sind. Auf diese Weise kann der Fahrer erkennen, ob er sich zu weit rechts oder zu weit links relativ zu dem Beginn der Fahrwegverengung befindet.

Bevorzugt umfasst das erste graphische Element Orientierungshilfen, welche eine Verlängerung des zweiten graphischen Elements des Fahrzeugs in das erste graphische Element der Fahrwegverengung hinein anzeigen. Alternativ oder zusätzlich können gemäß einer anderen Ausgestaltung des erfindungsgemäßen Verfahrens die Orientierungshilfen eine Verlängerung des ersten graphischen Elements der Fahrwegverengung in Richtung des zweiten graphischen Elements des Fahrzeugs anzeigen. Beispielsweise wird ein Korridor als Verlängerung der Darstellung des Fahrzeugs angezeigt, der in das erste graphische Element der Fahrwegverengung hineinreicht.

Dabei kann die Anzeige dieses Korridors als Teil des ersten graphischen Elements aufgefasst werden. Des Weiteren können die Orientierungshilfen Führungslinien sein, welche dem Fahrer visualisieren, wie der Abstand des Fahrzeugs in Querrichtung von den seitlichen Begrenzungen der Fahrwegverengung ist.

Gemäß einer weiteren Ausgestaltung des erfindungsgemäßen Verfahrens werden beidseitig neben dem zweiten graphischen Element Querführungselemente angezeigt, welche den seitlichen Abstand des Fahrzeugs von den seitlichen Begrenzungen des Fahrwegs oder der Fahrwegverengung in Fahrtrichtung visualisieren. Die Anzeige der Querführungselemente wird auch als Teil des ersten graphischen Elements aufgefasst. Die Querführungselemente können insbesondere eine feste Relativposition zu dem zweiten graphischen Element des Fahrzeugs haben, das heißt sie werden mit dem zweiten graphischen Element des Fahrzeugs mitbewegt, wenn sich das Fahrzeug bewegt. Die Querführungselemente sind insbesondere Pfeile, die den seitlichen Abstand des Fahrzeugs von dem Fahrweg bei der aktuellen Position des Fahrzeugs anzeigt. Durch die Anzeige der Querführungselemente wird der Fahrer bei der Annäherung an die Fahrwegverengung sowie bei der Passage durch die Fahrwegverengung unterstützt.

Bei einer Weiterbildung des erfindungsgemäßen Verfahrens werden bei einer Fahrwegverengung der zweiten Kategorie statische und dynamische Begrenzungen des Fahrwegs erfasst. Bei dem ersten graphischen Element werden dann statische Begrenzungen unterscheidbar von dynamischen Begrenzungen dargestellt. Die Unterscheidbarkeit kann beispielsweise durch unterschiedliche Farben, klar unterscheidbare graphische Strukturen oder durch andere Hervorhebungen der dynamischen Begrenzungen hergestellt werden. Auf diese Weise kann der Fahrer schnell und intuitiv erfassen, ob die Fahrwegverengung eine dynamische Begrenzung umfasst, welche höhere Aufmerksamkeit erfordert.

Bei dem erfindungsgemäßen Verfahren wird insbesondere die Position einer dynamischen Begrenzung in Fahrtrichtung fortwährend erfasst. Die Darstellung des ersten und/oder zweiten graphischen Elements wird dann fortwährend an die Relativposition des Fahrzeugs zu der dynamischen Begrenzung angepasst. Auf diese Weise kann der Fahrer insbesondere beim Passieren der dynamischen Begrenzung der Fahrwegverengung unterstützt werden.

Gemäß einer weiteren Ausgestaltung des erfindungsgemäßen Verfahrens wird bei einer Fahrwegverengung der zweiten Kategorie zusätzlich zu der Darstellung, wie sie bei der Fahrwegverengung der ersten Kategorie erfolgt, eine Angabe der Breite der Fahrwegverengung relativ zu der Breite des Fahrzeugs angezeigt. Diese Angabe der relativen Breite erfolgt insbesondere numerisch oder alphanumerisch.

Beispielsweise kann der Abstand der linken Seite des Fahrzeugs von der linken Begrenzung der Fahrwegverengung und der Abstand der rechten Seite des Fahrzeugs von der rechten Begrenzung der Fahrwegverengung angegeben werden. Bevorzugt stellt bei dem erfindungsgemäßen Verfahren jedoch die Angabe die Differenz der Breite der Fahrwegverengung und der Breite des Fahrzeugs dar. Es wird in diesem Fall somit nicht die relative Querposition des Fahrzeugs zu der Fahrwegverengung berücksichtigt. Hierdurch wird vermieden, dass der Fahrer durch die Angabe von zwei seitlichen Abständen zu der Fahrwegverengung und durch die Verarbeitung dieser Information vom Fahrgeschehen abgelenkt wird.

Gemäß dem erfindungsgemäßen Verfahren wird erfasst, ob das Fahrzeug die Fahrwegverengung bereits erreicht hat oder ob sich das Fahrzeug bereits in der Passage der Fahrwegverengung befindet. In diesem Fall unterscheidet sich die Art der Darstellung ferner in Abhängigkeit davon, ob die Fahrwegverengung noch nicht erreicht wurde oder ob sich das Fahrzeug bereits in der Passage der Fahrwegverengung befindet. Diese weitere Unterscheidung bei der Darstellung berücksichtigt, dass sich die Art der Unterstützung des Fahrers unterscheidet, je nachdem, ob sich das Fahrzeug bereits in der Fahrwegverengung befindet oder nicht.

Wenn das Fahrzeug die Fahrwegverengung noch nicht erreicht hat, kann beispielsweise die Entfernung bis zu dem Beginn der Fahrwegverengung angezeigt werden. Ferner kann insbesondere bei einer die Fahrwegverengung der zweiten Kategorie die Angabe der Breite der Fahrwegverengung relativ zu der Breite des Fahrzeugs in dem graphischen Element bei der dargestellten Fahrwegverengung angezeigt werden, wohingegen die Angabe der Breite der Fahrwegverengung eines bereits passierten Abschnitts der Fahrwegverengung relativ zu der Breite des Fahrzeugs angezeigt wird, wenn erfasst wurde, dass sich das Fahrzeug bereits in der Passage der Fahrwegverengung befindet.

Alternativ kann insbesondere bei einer die Fahrwegverengung der zweiten Kategorie während der Passage der Fahrwegverengung auch sowohl die Breite der Fahrwegverengung eines bereits passierten Abschnitts der Fahrwegverengung relativ zu der Breite des Fahrzeugs als auch die Breite der Fahrwegverengung in einem vorausliegenden Abschnitt der Fahrwegverengung relativ zu der Breite des Fahrzeugs angezeigt werden.

Gemäß einer weiteren Ausgestaltung wird auch die Entfernung bis zum Ende der Fahrwegverengung angezeigt, wenn erfasst wurde, dass sich das Fahrzeug bereits in der Passage der Fahrwegverengung befindet.

Diese Anzeigen unterstützen vorteilhafterweise den Fahrer auf besonders intuitive Weise bei der Annäherung an eine Fahrwegverengung und beim Passieren der Fahrwegverengung.

Das erfindungsgemäße Fahrerassistenzsystem ist gekennzeichnet durch eine Analyseeinheit, mit der die Fahrwegverengung kategorisierbar ist, wobei einer Fahrwegverengung eine erste Kategorie zugeordnet wird, wenn sie nur statische Begrenzungen umfasst, und eine zweite Kategorie zugeordnet wird, wenn sie dynamische Begrenzungen umfasst. Des Weiteren umfasst das Fahrerassistenzsystem eine Anzeigevorrichtung, die ausgebildet ist, Graphikdaten zu erzeugen, welche während des Annäherns an die Fahrwegverengung und/oder während der Passage der Fahrwegverengung zum Unterstützen des Fahrers des Fahrzeug ein erstes graphisches Element für die Fahrwegverengung und ein zweites graphisches Element für die Fahrwegverengung anzeigen, wobei sich die Art der Darstellung des ersten und/oder zweiten graphischen Elements in Abhängigkeit von der Kategorie der erfassten Fahrwegverengung unterscheidet, sowie sich die Art der Darstellung in Abhängigkeit davon unterscheidet, ob die Fahrwegverengung noch nicht erreicht wurde oder ob sich das Fahrzeug bereits in der Passage der Fahrwegverengung befindet.

Das erfindungsgemäße Fahrerassistenzsystem ist insbesondere ausgebildet, das erfindungsgemäße Verfahren auszuführen. Es weist daher auch dieselben Vorteile wie das erfindungsgemäße Verfahren auf.

Gemäß einer Ausgestaltung des erfindungsgemäßen Fahrerassistenzsystems umfasst die Sensoreinheit eine Kamera. Mit der Anzeigevorrichtung ist zumindest das erste graphische Element dem von der Kamera aufgenommenen Bild überlagerbar. Alternativ oder zusätzlich kann auch das zweite graphische Element dem von der Kamera aufgenommenen Bild überlagert werden.

Die Erfindung wird nun anhand eines Ausführungsbeispiels mit Bezug zu den Zeichnungen erläutert.
- Figur 1: zeigt schematisch ein Ausführungsbeispiel des erfindungsgemäßen Fahrerassistenzsystems,
- Figuren 2 bis 6: veranschaulichen Verkehrssituationen, bei welchen das erfindungsgemäße Verfahren eingesetzt wird,
- Figuren 7A bis 7C: veranschaulichen verschiedene Phasen bei der Passage einer Fahrwegverengung eines Fahrzeugs,
- Figuren 8A und 8B: zeigen Anzeigen, die von dem Ausführungsbeispiel des erfindungsgemäßen Verfahrens erzeugt werden, wenn ein Fahrzeug eine Fahrwegverengung der ersten Kategorie passiert und
- Figuren 9A bis 9C: zeigen Anzeigen, die von dem erfindungsgemäßen Verfahren erzeugt werden, wenn eine Fahrwegverengung der weiten Kategorie passiert wird.

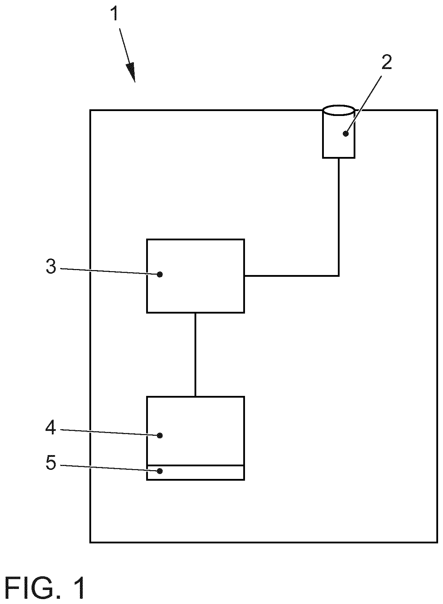

Mit Bezug zu Figur 1 wird zunächst der grundsätzliche Aufbau des Ausführungsbeispiels des Fahrerassistenzsystems zum Unterstützen eines Fahrers eines Fahrzeugs 1 bei der Passage einer Fahrwegverengung erläutert:
Das Fahrerassistenzsystem umfasst eine Sensoreinheit 2, die wiederum eine Kamera umfasst, welche kontinuierlich Bilder vom Fahrweg des Fahrzeugs in Fahrtrichtung aufnimmt. Die Bilddaten überträgt die Sensoreinheit 2 an eine Analyseeinheit 3. In der Analyseeinheit 3 findet eine Auswertung der Bilddaten statt. Dabei wird insbesondere der Verlauf des Fahrweges in Fahrtrichtung bestimmt. Ferner werden Begrenzungen des Fahrweges erfasst. Auf Basis dieser Auswertung wird erkannt, ob sich der Fahrweg in Fahrtrichtung des Fahrzeugs 1 verengt. Wenn eine solche Fahrwegverengung detektiert wurde, werden ferner die Begrenzungen, welche die Fahrwegverengung bilden, analysiert. Dabei wird insbesondere bestimmt, ob es sich um statische Begrenzungen oder dynamische Begrenzungen handelt. Statische Begrenzungen verändern ihre Position innerhalb eines bestimmten Messintervalls nicht. Dynamische Begrenzungen verändern hingegen ihre Position während des Messintervalls. Bei dynamischen Begrenzungen werden die Bilddaten ferner so analysiert, dass die Trajektorie der dynamischen Begrenzung relativ zu dem ortsfesten Fahrweg und relativ zu dem eigenen Fahrzeug 1 bestimmt wird.

Daten zu der Bilddatenanalyse, das heißt insbesondere sowohl die Bilddaten an sich als auch die zugehörigen Daten zu einer erfassten Fahrwegverengung, deren Begrenzungen und der Kategorie der Fahrwegverengung, sowie der Trajektorien einer dynamischen Begrenzung werden von der Analyseeinheit 3 an eine Anzeigevorrichtung 4 übertragen. Die Anzeigevorrichtung 4 kann Graphikdaten erzeugen, welche während des Annäherns an eine Fahrwegverengung und/oder während der Passage der Fahrwegverengung den Fahrer des Fahrzeugs 1 unterstützen, wie es später mit Bezug zu einem Ausführungsbeispiel des erfindungsgemäßen Verfahrens erläutert wird. Die Graphikdaten werden auf eine Anzeigefläche 5 angezeigt, welche beispielsweise im Kombiinstrument des Fahrzeugs 1 angeordnet ist. Bei der Anzeigefläche 5 kann es sich jedoch auch um ein Head-up-Display handeln.

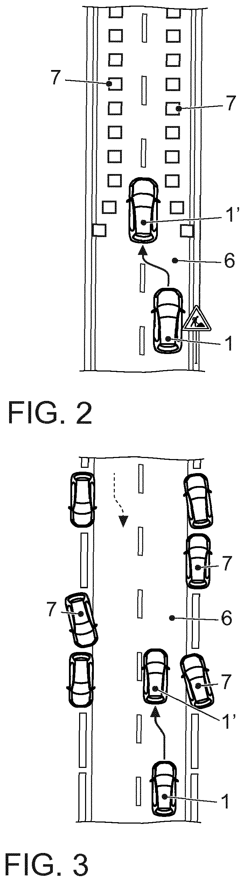

Im Folgenden wird die weitere Ausbildung der Analyseeinheit 3 und der Anzeigevorrichtung 4 in Verbindung mit einem Ausführungsbeispiel des erfindungsgemäßen Verfahrens erläutert. Mit Bezug zu den Figuren 2 bis 6 wird zunächst erläutert, in welchen Verkehrssituationen das erfindungsgemäße Verfahren zum Einsatz kommt.

Die Anzeige des Fahrerassistenzsystems soll den Fahrer des Fahrzeugs 1 bei der Querführung des Fahrzeugs 1 bei der Durchfahrt von Engstellen, im fließenden Verkehr beim Durchfahren von Engstellen oder der Vorbeifahrt an Fahrzeugkolonnen in Nachbarfahrspuren, an stehenden Hindernissen oder parkenden Fahrzeugen unterstützen. Diese Funktion des Fahrerassistenzsystems kann insbesondere bei niedrigen Geschwindigkeiten, das heißt insbesondere in der Innenstadt eingesetzt werden. Gleichermaßen kann der Fahrer jedoch auch beim Befahren von Autobahnen und Landstraßen durch diese Funktion unterstützt werden.

In Figur 2 ist eine Verkehrssituation gezeigt, bei der sich der Fahrweg 6 durch eine Pylonengasse verengt. Die Fahrwegverengung weist somit statische Begrenzungen 7 auf, die von Pylonen gebildet sind. Dabei können Pylonen den Fahrweg 6 beidseitig, wie in Figur 2 gezeigt, oder einseitig (nicht gezeigt) begrenzen. Wie in Figur 2 gezeigt, muss bei einer solchen Fahrwegverengung das Fahrzeug 1, 1' in die Mitte des Fahrweges 6 fahren, um die Fahrwegverengung zu passieren. Da es sich bei den Pylonen um statische Begrenzungen 7 handelt, ist die in Figur 2 gezeigte Fahrwegverengung der ersten Kategorie zugeordnet.

In Figur 3 ist ein weiteres Beispiel einer Fahrwegverengung der ersten Kategorie gezeigt. In diesem Fall werden die statischen Begrenzungen 7 von parkenden Fahrzeugen gebildet.

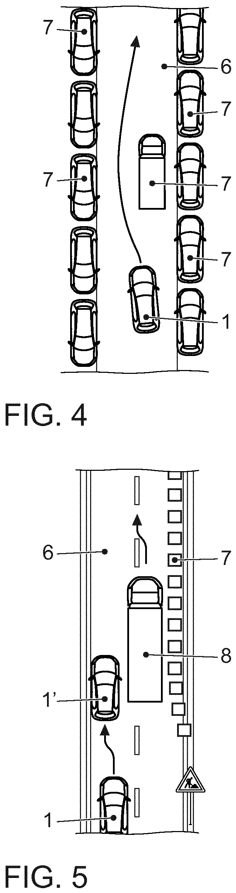

In Figur 4 ist ein weiteres Beispiel einer Fahrwegverengung der ersten Kategorie gezeigt. In diesem Fall wird der Fahrweg 6 zum einen von parkenden Fahrzeugen als statische Begrenzung 7 als auch von einem in zweiter Reihe parkenden Fahrzeug als weitere statische Begrenzung 7 verengt.

In Figur 5 ist ein Beispiel einer Fahrwegverengung der zweiten Kategorie gezeigt. In diesem Fall verengt sich der Fahrweg 6 zum einen durch eine statische Begrenzung 7. Zum anderen bewegt sich innerhalb dieser statischen Begrenzung 7 beispielsweise ein Lastwagen auf der rechten Seite des Fahrwegs 6 innerhalb der Verengung. Dieser Lastwagen stellt eine dynamische Begrenzung 8 dar, da er sich relativ zu dem Fahrweg 6 bewegt. Um in diesem Fall die Fahrwegverengung zu passieren, welche sowohl von der statischen Begrenzung 7 als auch von der dynamischen Begrenzung 8 gebildet wird, muss das Fahrzeug 1, 1' sehr weit am linken Rand der Fahrwegverengung fahren. Wie es später erläutert wird, wird der Fahrer des Fahrzeugs 1, 1' in diesem Fall von der Anzeige des Fahrerassistenzsystems unterstützt.

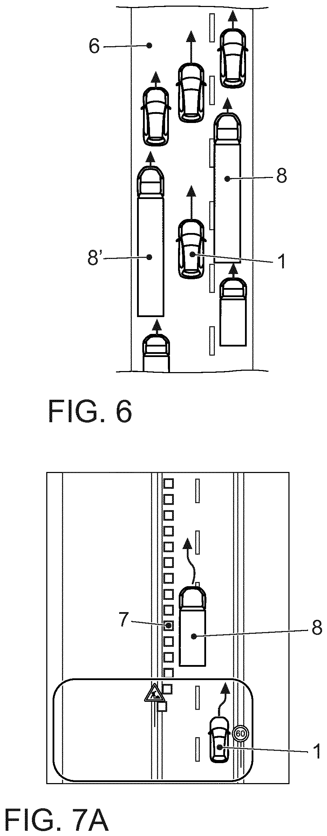

In Figur 6 ist ein weiteres Beispiel einer Fahrwegverengung der zweiten Kategorie gezeigt. In diesem Fall ist der Fahrweg die mittlere Spur zum Beispiel einer Autobahn. Der mitfahrende Verkehr, d. h. Die Fahrzeuge auf den Spuren rechts und links neben dem Fahrweg 6 des Fahrzeugs 1, verengt dabei den Fahrweg 6 der mittleren Spur, auf dem sich das Fahrzeug 1 bewegt. Diese Fahrzeuge der Nebenspuren stellen somit dynamische Begrenzungen 8 einer Fahrwegverengung der mittleren Spur dar.

Mit Bezug zu den Figuren 7A bis 7C werden die verschiedenen Phasen einer Durchfahrt einer Fahrwegverengung erläutert:

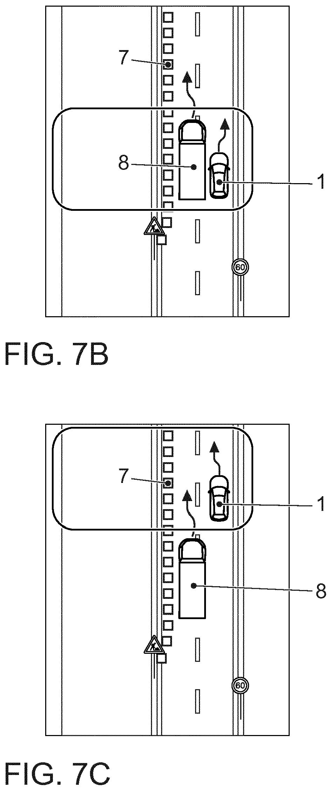

In Figur 7A ist die Situation gezeigt, bei der sich das Fahrzeug 1 an eine Fahrwegverengung mit einer statischen Begrenzung 7 und einer dynamischen Begrenzung 8 annähert. Bei der in Figur 7B gezeigten Situation befindet sich das Fahrzeug 1 innerhalb der Fahrwegverengung. Das Fahrzeug 1 befindet sich somit in der Passage der Fahrwegverengung. In Fig. 7C ist die Situation gezeigt, bei der das Fahrzeug 1 die Fahrwegverengung verlässt. Bei dem erfindungsgemäßen Verfahren wird insbesondere zwischen der Situation bei der Annäherung an die Fahrwegverengung und der Situation beim Passieren der Fahrwegverengung unterschieden und entsprechend unterschiedliche Anzeigen auf der Anzeigefläche 5 erzeugt.

Im Folgenden werden nun ein Ausführungsbeispiel des erfindungsgemäßen Verfahrens sowie weitere Details des Ausführungsbeispiels des Fahrerassistenzsystems erläutert:
Wie bereits bei dem Ausführungsbeispiel des Fahrerassistenzsystems beschrieben, werden mittels der Sensoreinheit 2 kontinuierlich Bilddaten in Fahrtrichtung des Fahrzeugs 1 aufgenommen. Mittels dieser Daten wird erfasst, ob sich der Fahrweg 6 in Fahrtrichtung des Fahrzeugs 1 verengt. Wenn eine solche Fahrwegverengung erfasst worden ist, wird diese kategorisiert. Dabei wird einer Fahrwegverengung eine erste Kategorie zugeordnet, wenn sie nur statische Begrenzungen 7 umfasst. Wenn die Fahrwegverengung hingegen auch dynamische Begrenzungen 8 umfasst, wird der Fahrwegverengung eine zweite Kategorie zugeordnet.

Während des Annäherns an eine erfasste Fahrwegverengung und während der Passage dieser Fahrwegverengung wird eine Anzeige auf der Anzeigefläche 5 der Anzeigevorrichtung 4 zum Unterstützen des Fahrers des Fahrzeugs 1 erzeugt.

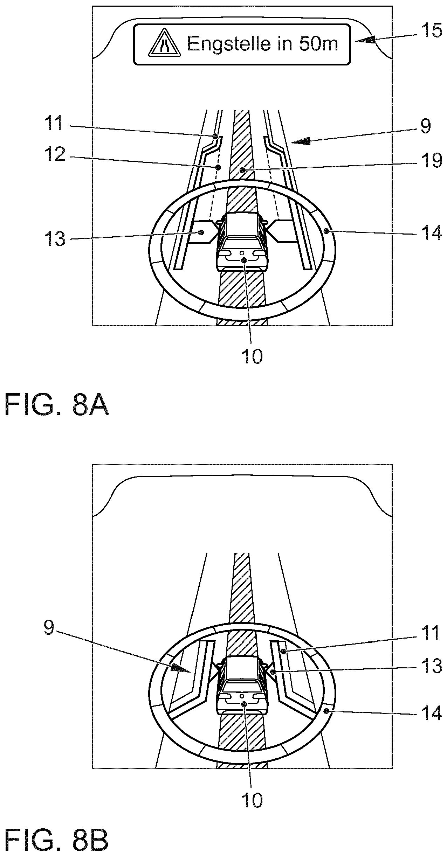

In Fig. 8A ist eine solche Anzeige gezeigt, die auf der Anzeigefläche 5 wiedergegeben wird, wenn eine Fahrwegverengung der ersten Kategorie erfasst worden ist und außerdem ermittelt wurde, dass sich das Fahrzeug 1 noch vor der Fahrwegverengung befindet, das heißt, wenn sich das Fahrzeug 1 an die Fahrwegverengung annähert.

Auf der Anzeigefläche 5 werden insbesondere zwei graphische Elemente angezeigt. Das erste graphische Element 9 visualisiert die Fahrwegverengung. Das zweite graphische Element 10 stellt das Fahrzeug 1 dar. Die relative Anordnung der Darstellungen des ersten und zweiten graphischen Elements 9, 10 müssen zwar nicht maßstabsgetreu zu den tatsächlichen Abmessungen der Fahrwegverengung relativ zu den Abmessungen und der Position des Fahrzeugs 1 sein. Die Anordnung und Gestaltung des beiden graphischen Elemente 9, 10 für die Fahrwegverengung und das Fahrzeug 1 visualisiert jedoch die Abmessungen und die Position der Fahrwegverengung relativ zu dem Fahrzeug 1.

Sobald eine Fahrwegverengung erkannt worden ist, wird auf der Anzeigefläche 5 ein Hinweis 15 angezeigt, welcher die Angabe enthält, in welcher Entfernung von dem Fahrzeug 1 die Fahrwegverengung beginnt. Des Weiteren verändert sich die bisherige Anzeige des Fahrerassistenzsystems, welche gegebenenfalls Darstellungen der Begrenzungen des derzeitigen Fahrwegs 6 umfassen, so dass das erste graphische Element 9 dargestellt wird. Dieses umfasst beidseitig neben dem zweiten graphischen Element 10 für das Fahrzeug Linien 11, welche die Begrenzung des Fahrwegs 6 beidseitig neben dem Fahrzeug 1 und bei der Fahrwegverengung visualisieren.

Die Linien 11 sind generisch, das heißt sie weisen nur allgemein auf die Annäherung an eine Fahrwegverengung hin, sie visualisieren nicht genau die Art der tatsächlichen Begrenzungen der Fahrwegverengung. Die Linien 11 geben allerdings das Maß der Fahrwegverengung relativ zu dem Fahrzeug 1 durch den Sprung der Linien 11 bei der Position des Beginns der Fahrwegverengung nach innen wieder.

Des Weiteren umfasst das erste graphische Element 9 Führungslinien 12 als Orientierungshilfen. Diese Führungslinien 12 verlängern den Beginn der Fahrwegverengung senkrecht zur Fahrtrichtung des Fahrzeugs 1, welches durch das zweite graphische Element 10 dargestellt wird. Dabei wird bei der Darstellung gemäß Figur 8A eine perspektivische Projektion gewählt. Die Orientierungshilfen des ersten graphischen Elements 9 können ferner eine graphische Darstellung 19 eines Korridors umfassen. Dieser Korridor verlängert die Breite des zweiten graphischen Elements 10 des Fahrzeugs in die Darstellung der Fahrwegverengung durch das erste graphische Element 9 hinein.

Schließlich umfasst das erste graphische Element 9 noch graphische Querführungselemente 13, die neben dem zweiten graphischen Element 10 für das Fahrzeug 1 angezeigt werden. Diese Querführungselemente 13 visualisieren den seitlichen Abstand des Fahrzeugs 1 von den seitlichen Begrenzungen des Fahrwegs 6, wenn sich das Fahrzeug 1 noch nicht in der Fahrwegverengung befindet, oder der Fahrwegverengung, wenn sich das Fahrzeug 1 innerhalb der Fahrwegverengung befindet.

Der Fahrer des Fahrzeugs 1 kann durch diese Darstellung auf der Anzeigefläche 5 somit anhand der Querführungselemente 13 den derzeitigen Abstand von der Begrenzung des Fahrwegs 6 abschätzen. Durch die Überlagerung der Führungslinien 12 mit den Querführungselementen 13 kann er ferner die Position des Fahrzeugs 1 relativ zu dem Beginn der Fahrwegverengung abschätzen und gegebenenfalls korrigieren.

Des Weiteren wird ein Hinweisring 14 um das zweite graphische Element 10 für das Fahrzeug 1 dargestellt, welcher allgemein auf eine potentielle Gefährdung hinweist.

In Figur 8B ist die Anzeige auf der Anzeigefläche 5 gezeigt, wenn erfasst worden ist, dass sich das Fahrzeug 1 innerhalb der Fahrwegverengung der ersten Kategorie befindet. In diesem Fall verschwindet der Hinweis 15. Ferner verschwinden die Führungslinien 12. Weiterhin umfasst das erste graphische Element 9 jedoch die Linien 11 für die Begrenzung der Fahrwegverengung 6, die Querführungselemente 13 und den Hinweisring 14.

Das zweite graphische Element 10 für das Fahrzeug 1 wird nun innerhalb der von dem ersten graphischen Element 9 dargestellten Engstelle wiedergegeben.

Die Anzeige einer Fahrwegverengung der ersten Kategorie macht den Fahrer des Fahrzeugs 1 somit auf die Engstelle aufmerksam. Von dem ersten graphischen Element 9 wird dabei der Verlauf der Engstelle als generisches Element wiedergegeben. Sie ändert sich nicht in Abhängigkeit von der Art der Begrenzung oder des Verlaufs der Engstelle. Allerdings werden die Abmessungen der Engstelle graphisch visualisiert und es werden dem Fahrer Orientierungshilfen mittels des ersten graphischen Elements 9 gegeben. Sie geben dem Fahrer die Möglichkeit, frühzeitig eine Abschätzung der vorausliegenden Anpassung der Weite des Fahrwegs 6 vorzunehmen. Der Abstand links und rechts vom eigenen Fahrzeug 1 lässt sich somit schon in der Annäherung an die Fahrwegverengung einschätzen.

Die Art der begrenzenden Elemente wird von dem graphischen Element 9 nicht aufgegriffen. Beispielsweise wird nicht dargestellt, dass es sich bei den statischen Begrenzungen 7 um Pylonen, parkende Fahrzeuge oder Schrammborde handelt. Es wird nur berücksichtigt, dass es sich um statische Begrenzungen 7 handelt. Durch die Darstellung 19 des Korridors kann des Weiteren der Verlauf der empfohlenen Fahrspur innerhalb der Fahrwegverengung visualisiert werden. Dabei kann berücksichtigt werden, dass unter Umständen keine mittige Durchfahrt durch die Fahrwegverengung empfohlen wird, wenn sich beispielsweise auf einer Seite größere statische Begrenzungen 7 als auf der anderen Seite befinden. Auf diese Weise kann der Fahrer leicht und intuitiv antizipieren, ob die Assistenzfunktion mittig regelt oder aufgrund eines größeren Objekts dichter an einer Fahrwegseite führen wird.

Gemäß einer anderen Ausgestaltung des erfindungsgemäßen Verfahrens, die im vorliegenden Fall nicht dargestellt ist, kann auch die Art der statischen Begrenzung 7 von dem ersten graphischen Objekt 9 visualisiert werden. In diesem Fall kann der Fahrer beispielsweise erkennen, ob die Fahrwegverengung von einer Pylonengasse, von einseitig oder beidseitig parkenden Fahrzeugen, von einer Schrammborde oder Kombinationen solcher statischer Begrenzungen 7 gebildet ist.

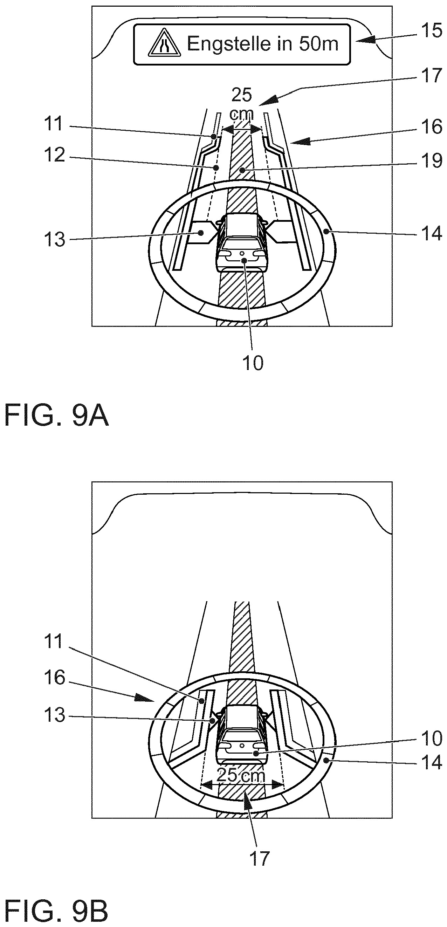

Mit Bezug zu den Fig. 9A bis 9C wird die Anzeige auf der Anzeigefläche 5 erläutert, wenn eine Fahrwegverengung der zweiten Kategorie erfasst worden ist.

In Figur 9A ist die Anzeige wiedergegeben, wenn erfasst worden ist, dass sich das Fahrzeug 1 noch nicht innerhalb der Fahrwegverengung befindet, sondern sich an diese Fahrwegverengung annähert. In diesem Fall wird statt des graphischen Elements 9 das graphische Element 16 angezeigt. Dieses unterscheidet sich von dem graphischen Element 9 darin, dass ein graphisches Element 17 mit der Angabe der Breite der Fahrwegverengung relativ zu der Breite des Fahrzeugs 1 angezeigt wird. Durch diese Angabe kann der Fahrer sofort auf die Kategorie der Fahrwegverengung schließen.

Im hier beschriebenen Ausführungsbeispiel wird die Differenz der Breite der Fahrwegverengung und der Breite des Fahrzeugs 1 angegeben. Im in Figur 9A gezeigten Fall ist diese Differenz 25 cm. Wenn das Fahrzeug 1 die Fahrwegverengung mittig passiert, ergibt sich somit rechts und links neben dem Fahrzeug 1 ein Abstand von 12,5 cm zu der Begrenzung der Fahrwegverengung. Gemäß einer Ausgestaltung betrifft die Angabe des graphischen Elements 17 die Breite der Fahrwegverengung zu Beginn der Fahrwegverengung relativ zu der Breite des Fahrzeugs 1. Gemäß einer anderen Ausgestaltung betrifft diese Angabe die minimal erfasste Breite der Fahrwegverengung relativ zu der Breite des Fahrzeugs 1. Des Weiteren umfasst das erste graphische Element 16 die weiteren graphischen Elemente 11, 12, 13 und 14, die auch bei dem ersten graphischen Element 9 angezeigt werden, wenn eine Fahrwegverengung der ersten Kategorie visualisiert wird.

In Figur 9B ist die Anzeige auf der Anzeigefläche 5 gezeigt, wenn sich das Fahrzeug 1 innerhalb einer Fahrwegverengung der zweiten Kategorie befindet. In diesem Fall unterscheidet sich die Anzeige von der in Figur 8B gezeigten Anzeige dadurch, dass weiterhin der graphische Hinweis 17 mit der Angabe der Breite der Fahrwegverengung relativ zu der Breite des Fahrzeugs 1 angezeigt wird. Im Vergleich zu der Anzeige beim Annähern an die Fahrwegverengung, wie sie in Fig. 9A dargestellt ist, wird diese Angabe der Breite jedoch perspektivisch hinter bzw. unter dem zweiten graphischen Element 10 für das Fahrzeug dargestellt, das heißt hinter der Darstellung für das Fahrzeug 1 bezogen auf die Fahrtrichtung des Fahrzeugs 1. Die Angabe der Breite bezieht sich in diesem Fall auf die Breite der Fahrwegverengung neben der aktuellen Position des Fahrzeugs oder unmittelbar vor dieser Position. Außerdem kann die Angabe der Breite auch eine Rückschau beim Passieren der Fahrwegverengung betreffen. In diesem Fall wird die Breite der Fahrwegverengung unmittelbar hinter dem Fahrzeug 1 relativ zu der Breite des Fahrzeugs 1 angezeigt. Die weitere Anzeige entspricht der in Figur 8B wiedergegebenen Anzeige für eine Fahrwegverengung der ersten Kategorie, falls sich keine dynamische Begrenzung 8 neben oder unmittelbar vor dem Fahrzeug 1 befindet.

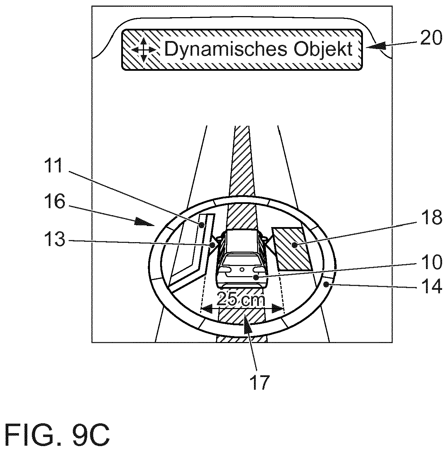

Wenn beim Passieren einer Fahrwegverengung der zweiten Kategorie eine dynamische Begrenzung 8 neben oder in einem bestimmten Abstand vor dem Fahrzeug 1 erfasst worden ist, wird die in Figur 9C wiedergegebene Anzeige auf der Anzeigefläche 5 dargestellt. Zum einen wird der Hinweis 20 angezeigt, welcher den Fahrer darauf aufmerksam macht, dass sich eine dynamische Begrenzung 8 in der Umgebung des eigenen Fahrzeugs 1 befindet, welche eine erhöhte Aufmerksamkeit erfordert. Dieser Hinweis 20 wird in einer Farbe angezeigt, welche sich von den Farben der restlichen graphischen Elemente, wie sie vorstehend beschrieben wurden, unterscheidet.

Des Weiteren umfasst in diesem Fall das erste graphische Element 16 ein graphisches Element 18, welches die dynamische Begrenzung 8 und die Position dieser dynamischen Begrenzung 8 relativ zu der Fahrwegverengung und relativ zu dem Fahrzeug 1 durch eine bestimmte Relativposition des graphischen Elements 18 zu dem zweiten graphischen Element 10 und innerhalb des ersten graphischen Elements 16 visualisiert. Die Anordnung des graphischen Elements 18 auf der Anzeigefläche 5 wird dabei kontinuierlich an die erfasste Trajektorie der dynamischen Begrenzung 8 angepasst, so dass der Fahrer kontinuierlich die Relativposition des Fahrzeugs 1 zu der dynamischen Begrenzung 8 erfassen kann. Das graphische Element 18 wird dabei in derselben Farbe angezeigt wie der Hinweis 20. Auf diese Weise kann sich der Fahrer durch die Zusatzinformation des graphischen Elements 18 und des Hinweises 20 auf plötzliche Veränderungen der Position der dynamischen Begrenzung 8 einstellen. Gleichzeitig ist er somit auf Anpassungen der Assistenzfunktion des Fahrerassistenzsystems vorbereitet. Verändert die dynamische Begrenzung 8 beispielsweise ihre Position in Richtung des Fahrzeugs 1, wird dies zum einen durch eine Veränderung der Position des graphischen Objekts 18 visualisiert. Zum anderen verändern sich auch die Querführungselemente 13 und die Linien 11 für die Visualisierung der Fahrwegverengung.

Außerdem ist es möglich für den Fall, dass sich die dynamische Begrenzung 8 zu weit in Richtung des voraussichtlich von dem Fahrzeug 1 befahrenen Fahrkorridors hinein bewegt, eine Warnung mit entsprechender Verortung auf dem Hinweisring 14 darzustellen.

In weiteren Ausführungsbeispielen kann das vorstehend beschriebene Ausführungsbeispiel um weitere Funktionen ergänzt werden, die in beliebigen Kombinationen eingesetzt werden können.

In einem weiteren Ausführungsbeispiel wird in der Phase des Passierens der Fahrwegverengung die erfasste Länge der Fahrwegverengung angezeigt. In Analogie zur Baustellendurchfahrt oder zu Stauinformationen gewinnt der Fahrer auf diese Weise ein Gefühl für die Dauer, für die er voraussichtlich in der Situation mit der Fahrwegverengung verbleibt.

Des Weiteren können die Fahrwegverengungen um weitere Kategorien ergänzt werden. In Abhängigkeit von diesen weiteren Kategorien kann das erste und/oder das zweite graphische Element für die Fahrwegverengung und für das Fahrzeug 1 weiter unterschiedlich angezeigt werden. Beispielsweise kann eine weitere Kategorie die Erkennbarkeit der Fahrwegverengung betreffen. Es kann in diesen Fall zwischen der Art der Begrenzung unterschieden werden, je nachdem ob sie durchgängig ist, wie beispielsweise bei einer Mauer, oder mit Lücken versehen ist, wie beispielsweise bei Bäumen, Leitkegeln oder Baken. Des Weiteren kann hinsichtlich der Höhe der Begrenzung unterschieden werden. Es gibt hohe Begrenzungen, wie beispielsweise bei Häusern und Tunneln. Ferner gibt es niedrige Begrenzungen, wie beispielsweise bei Markierungsknöpfen, Pylonen oder dergleichen. Des Weiteren kann hinsichtlich der Vorhersehbarkeit der Fahrwegverengung kategorisiert werden. Es gibt vorhersehbare und unvorhersehbare Situationen. Eine Fahrwegverengung mit nur statischen Begrenzungen 7 ist beispielsweise vorhersehbar, wohingegen eine Fahrwegverengung, die eine Einmündung, wie beispielsweise eine Autobahneinfahrt innerhalb einer Baustelle umfasst, eine unvorhersehbare Situation darstellt, da es passieren kann, dass andere Fahrzeuge in die Fahrwegverengung einfahren. Letztere Situation unterscheidet sich somit auch von der Fahrwegverengung der zweiten Kategorie, da nur die Einfahrt in die Fahrwegverengung erfasst wird, nicht jedoch eine dynamische Begrenzung 8.

Des Weiteren ist es möglich, die Bilddaten der Sensoreinheit 2 zusätzlich zu den vorstehend beschriebenen graphischen Elementen 9, 16, 10 auf der Anzeigefläche 5 anzuzeigen. Es kann somit eine Überlagerung der graphischen Elemente 6, 16, 10 mit den von der Kamera aufgenommenen Bilddaten erfolgen. Auf diese Weise kann der Fahrer noch einfacher und schneller die von dem Fahrerassistenzsystem zu Verfügung gestellte Unterstützung durch die verschiedenen graphischen Elemente erfassen. Dies erleichtert es dem Fahrer, das Fahrzeug 1 durch die Fahrwegverengung zu führen.

### Bezugszeichenliste

- 1: Fahrzeug
- 2: Sensoreinheit
- 3: Analyseeinheit
- 4: Anzeigevorrichtung
- 5: Anzeigefläche
- 6: Fahrweg
- 7: statische Begrenzung
- 8: dynamische Begrenzung
- 9: erstes graphisches Element bei einer Fahrwegverengung erster Kategorie
- 10: zweites graphisches Element
- 11: Linien
- 12: Führungslinien
- 13: Querführungselemente
- 14: Warnring
- 15: Hinweis
- 16: erstes graphisches Element bei einer Fahrwegverengung zweiter Kategorie
- 17: Angabe zur Breite
- 18: graphisches Element für eine dynamische Begrenzung 8
- 19: graphisches Element für Korridor
- 20: Hinweis

## Patentansprüche

1. Verfahren zum Unterstützen eines Fahrers eines Fahrzeugs (1) bei der Passage einer Fahrwegverengung, bei dem
mittels einer Sensoreinheit (2) eine Fahrwegverengung in Fahrtrichtung des Fahrzeugs (1) und ob das Fahrzeug (1) die Fahrwegverengung bereits erreicht hat, oder ob sich das Fahrzeug (1) bereits in der Passage der Fahrwegverengung befindet, erfasst wird,
die Fahrwegverengung kategorisiert wird, wobei einer Fahrwegverengung eine erste Kategorie zugeordnet wird, wenn sie nur statische Begrenzungen (7) umfasst, und eine zweite Kategorie zugeordnet wird, wenn sie dynamische Begrenzungen (8) umfasst,
**dadurch gekennzeichnet dass**
während des Annäherns an die Fahrwegverengung und/oder während der Passage der Fahrwegverengung zum Unterstützen des Fahrers des Fahrzeugs (1) ein erstes graphisches Element (9, 16) für die Fahrwegverengung und relativ dazu ein zweites graphisches Element (10) für das Fahrzeug (1) angezeigt wird, wobei sich die Art der Darstellung des ersten und/oder zweiten graphischen Elements (9, 16, 10) in Abhängigkeit von der Kategorie der erfassten Fahrwegverengung unterscheidet und sich die Art der Darstellung ferner in Abhängigkeit davon unterscheidet, ob die Fahrwegverengung noch nicht erreicht wurde oder ob sich das Fahrzeug (1) bereits in der Passage der Fahrwegverengung befindet.

2. Verfahren nach Anspruch 1,
**dadurch gekennzeichnet, dass**
mittels der Sensoreinheit (2) die Durchfahrtsbreite der Fahrwegverengung bestimmt wird und mittels des ersten und zweiten graphischen Elements (9, 16, 10) die Durchfahrtsbreite der Fahrwegverengung relativ zum Fahrzeug (1) dargestellt wird.

3. Verfahren nach Anspruch 1 oder 2,
**dadurch gekennzeichnet, dass**
bei einer Fahrwegverengung der ersten Kategorie einseitig oder beidseitig des Fahrwegs statische Begrenzungen (7) erfasst werden, welche den Fahrweg einengen, und das erste und zweite graphische Element (9, 10) so dargestellt werden, dass die Entfernung des Fahrzeugs (1) von dem Beginn der Fahrwegverengung und die Querposition des Fahrzeugs (1) relativ zu den statischen Begrenzungen (7) der Fahrwegverengung erkennbar sind.

4. Verfahren nach einem der vorhergehenden Ansprüche,
**dadurch gekennzeichnet, dass**
das erste graphische Element (9, 16) Orientierungshilfen (12, 19) umfasst, welche eine Verlängerung des zweiten graphischen Elements (10) des Fahrzeugs in das erste graphische Element (9, 16) der Fahrwegverengung hinein anzeigen und/oder eine Verlängerung des ersten graphischen Elements (9, 16) der Fahrwegverengung in Richtung des zweiten graphischen Elements (10) des Fahrzeugs (1) anzeigen.

5. Verfahren nach einem der vorhergehenden Ansprüche,
**dadurch gekennzeichnet, dass**
beidseitig neben dem zweiten graphischen Element (10) Querführungselemente (13) angezeigt werden, welche den seitlichen Abstand des Fahrzeugs (1) von den seitlichen Begrenzungen des Fahrwegs (6) oder der Fahrwegverengung in Fahrtrichtung visualisieren.

6. Verfahren nach einem der vorhergehenden Ansprüche,
**dadurch gekennzeichnet, dass**
bei einer Fahrwegverengung der zweiten Kategorie statische und dynamische Begrenzungen (7, 8) des Fahrwegs (6) erfasst werden und bei dem ersten graphischen Element (16) statische Begrenzungen (7) unterscheidbar von dynamischen Begrenzungen (8) dargestellt werden.

7. Verfahren nach Anspruch 6,
**dadurch gekennzeichnet, dass**
die Position einer dynamischen Begrenzung (8) in Fahrtrichtung fortwährend erfasst wird und die Darstellung des ersten und/oder zweiten graphischen Elements (16, 10) fortwährend an die Relativposition des Fahrzeugs (1) zu der dynamischen Begrenzung (8) angepasst wird.

8. Verfahren nach Anspruch 6 oder 7,
**dadurch gekennzeichnet, dass**
bei einer Fahrwegverengung der zweiten Kategorie zusätzlich zu der Darstellung, wie sie bei der Fahrwegverengung der ersten Kategorie erfolgt, eine Angabe (17) der Breite der Fahrwegverengung relativ zu der Breite des Fahrzeugs (1) angezeigt wird.

9. Verfahren nach Anspruch 8,
**dadurch gekennzeichnet, dass**
die Angabe (17) die Differenz der Breite der Fahrwegverengung und der Breite des Fahrzeugs (1) darstellt.

10. Verfahren nach einem der vorhergehenden Ansprüche,
**dadurch gekennzeichnet, dass**
bei einer Fahrwegverengung der zweiten Kategorie die Angabe (17) der Breite der Fahrwegverengung in Fahrrichtung relativ zu der Breite des Fahrzeugs (1) angezeigt wird, wenn erfasst wurde, dass das Fahrzeug die Fahrwegverengung noch nicht erreicht hat.

11. Verfahren nach einem der vorhergehenden Ansprüche,
**dadurch gekennzeichnet, dass**
bei einer Fahrwegverengung der zweiten Kategorie die Angabe (17) der Breite der Fahrwegverengung eines bereits passierten Abschnitts der Fahrwegverengung relativ zu der Breite des Fahrzeugs (1) angezeigt wird, wenn erfasst wurde, dass sich das Fahrzeug (1) bereits in der Passage der Fahrwegverengung befindet.

12. Verfahren nach einem der vorhergehenden Ansprüche,
**dadurch gekennzeichnet, dass**
die Entfernung bis zum Ende der Fahrwegverengung angezeigt wird, wenn erfasst wurde, dass sich das Fahrzeug bereits in der Passage der Fahrwegverengung befindet.

13. Fahrerassistenzsystem zum Unterstützen eines Fahrers eines Fahrzeugs (1) bei der Passage einer Fahrwegverengung mit
einer Sensoreinheit (2), mit der die Fahrwegverengung in Fahrtrichtung des Fahrzeugs (1) und ob das Fahrzeug (1) die Fahrwegverengung bereits erreicht hat, oder ob sich das Fahrzeug (1) bereits in der Passage der Fahrwegverengung befindet, erfassbar ist,
eine Analyseeinheit (3), mit der die Fahrwegverengung kategorisierbar ist, wobei einer Fahrwegverengung eine erste Kategorie zugeordnet wird, wenn sie nur statische Begrenzungen (7) umfasst, und eine zweite Kategorie zugeordnet wird, wenn sie dynamische Begrenzungen (8) umfasst,
**gekennzeichnet durch**
eine Anzeigevorrichtung (4), die ausgebildet ist, Graphikdaten zu erzeugen, welche während des Annäherns an die Fahrwegverengung und/oder während der Passage der Fahrwegverengung zum Unterstützen des Fahrers des Fahrzeugs (1) ein erstes graphisches Element (9, 16) für die Fahrwegverengung und ein zweites graphisches Element (10) für das Fahrzeug (1) anzeigen, wobei sich die Art der Darstellung des ersten graphischen Elements (9, 16) und/oder des zweiten graphischen Elements (10) in Abhängigkeit von der Kategorie der erfassten Fahrwegverengung unterscheidet und sich die Art der Darstellung ferner in Abhängigkeit davon unterscheidet, ob die Fahrwegverengung noch nicht erreicht wurde oder ob sich das Fahrzeug (1) bereits in der Passage der Fahrwegverengung befindet.

14. Fahrerassistenzsystem nach Anspruch 13,
**dadurch gekennzeichnet, dass**
die Sensoreinheit (2) eine Kamera umfasst und mit der Anzeigevorrichtung (5) zumindest das erste graphische Element (9, 16) dem von der Kamera aufgenommenen Bild überlagerbar ist.

## Claims

1. A method for assisting a driver of a vehicle (1) with passing through a roadway narrowing, in which
a sensor unit (2) detects a roadway narrowing in the direction of travel of the vehicle (1), and whether the vehicle (1) has already reached the roadway narrowing, or whether the vehicle (1) is already in the process of passing through the roadway narrowing,
the roadway narrowing is categorized, wherein a first category is associated with a roadway narrowing if it includes only static boundaries (7), and a second category is associated if it includes dynamic boundaries (8),
**characterized in that**
a first graphical element (9, 16) for the roadway narrowing and, relative thereto, a second graphical element (10) for the vehicle (1) are displayed as the roadway narrowing is being approached and/or as the roadway narrowing is being passed through in order to assist the driver of the vehicle (1), wherein the type of depiction of the first and/or second graphical elements (9, 16, 10) differs as a function of the category of the detected roadway narrowing, and the type of depiction furthermore differs as a function of whether the roadway narrowing has not yet been reached or whether the vehicle (1) is already in the process of passing through the roadway narrowing.

2. The method according to Claim 1,
**characterized in that**
the passage width of the roadway narrowing is determined by means of the sensor unit (2), and the passage width of the roadway narrowing relative to the vehicle (1) is depicted by means of the first and second graphical elements (9, 16, 10).

3. The method according to Claim 1 or 2,
**characterized in that**
static boundaries (7) which narrow the roadway are detected on one side or both sides of the roadway in the event of a roadway narrowing of the first category, which narrow the roadway, and the first and second graphical elements (9, 10) are depicted in such a way that the distance between the vehicle (1) and the start of the roadway narrowing and the transverse position of the vehicle (1) relative to the static boundaries (7) of the roadway narrowing can be recognized.

4. The method according to any of the preceding claims,
**characterized in that**
the first graphical element (9, 16) comprises orientation aids (12, 19), which display an extension of the second graphical element (10) of the vehicle into the first graphical element (9, 16) of the roadway narrowing and/or display an extension of the first graphical element (9, 16) of the roadway narrowing in the direction of the second graphical element (10) of the vehicle (1).

5. The method according to any of the preceding claims,
**characterized in that**
transverse guidance elements (13) are displayed on both sides next to the second graphical element (10), which guidance elements (13) visualize the lateral distance between the vehicle (1) and the lateral boundaries of the roadway (6) or of the roadway narrowing in the direction of travel.

6. The method according to any of the preceding claims,
**characterized in that**
static and dynamic boundaries (7, 8) of the roadway (6) are detected in the case of a roadway narrowing of the second category, and in the case of the first graphical element (16) static boundaries (7) are depicted so as to be distinguishable from dynamic boundaries (8).

7. The method according to Claim 6,
**characterized in that**
the position of a dynamic boundary (8) is continuously detected in the direction of travel, and the depiction of the first and/or second graphical elements (16, 10) is continuously adapted to the relative position of the vehicle (1) with respect to the dynamic boundary (8).

8. The method according to Claim 6 or 7,
**characterized in that**
in the event of a roadway narrowing of the second category, information (17) regarding the width of the roadway narrowing relative to the width of the vehicle (1) is displayed in addition to the depiction as it occurs in the event of the roadway narrowing of the first category.

9. The method according to Claim 8,
**characterized in that**
the information (17) depicts the difference between the width of the roadway narrowing and the width of the vehicle (1).

10. The method according to any of the preceding claims,
**characterized in that**
in the event of a roadway narrowing of the second category, the information (17) regarding the width of the roadway narrowing in the direction of travel relative to the width of the vehicle (1) is displayed if it was detected that the vehicle has not yet reached the roadway narrowing.

11. The method according to any of the preceding claims,
**characterized in that**
in the event of a roadway narrowing of the second category, the information (17) regarding the width of the roadway narrowing of an already passed section of the roadway narrowing relative to the width of the vehicle (1) is displayed if it was detected that the vehicle (1) was already in the process of passing through the roadway narrowing.

12. The method according to any one of the preceding claims,
**characterized in that**
the distance to the end of the roadway narrowing is displayed if it was detected that the vehicle was already in the process of passing through the roadway narrowing.

13. A driver assistance system for assisting a driver of a vehicle (1) with passing through a roadway narrowing, comprising
a sensor unit (2) with which the roadway narrowing in the direction of travel of the vehicle (1), and whether the vehicle (1) has already reached the roadway narrowing, or whether the vehicle (1) is already in the process of passing through the roadway narrowing, can be detected, and
an analysis unit (3) with which the roadway narrowing can be categorized, wherein a first category is associated with a roadway narrowing if it includes only static boundaries (7), and a second category is associated if it includes dynamic boundaries (8),
**characterized by**
a display device (4) which is designed to generate graphical data displaying a first graphical element (9, 16) for the roadway narrowing and a second graphical element (10) for the vehicle (1) as the roadway narrowing is being approached and/or as the roadway narrowing is being passed through, in order to assist the driver of the vehicle (1), wherein the type of the depiction of the first graphical element (9, 16) and/or of the second graphical element (10) differs as a function of the category of the detected roadway narrowing, and the type of the depiction furthermore differs as a function of whether the roadway narrowing has not yet been reached or whether the vehicle (1) is already in the process of passing through the roadway narrowing.

14. The driver assistance system according to Claim 13,
**characterized in that**
the sensor unit (2) comprises a camera, and at least the first graphical element (9, 16) can be superimposed on the image recorded by the camera using the display device (5).

## Revendications

1. Procédé d'assistance à un conducteur d'un véhicule (1) lors du passage d'un rétrécissement de la voie, dans lequel
au moyen d'une unité de capteur (2), un rétrécissement de la voie dans le sens de déplacement du véhicule (1) est déterminé et le fait que le véhicule (1) a déjà atteint le rétrécissement de la voie ou que le véhicule (1) se trouve déjà dans le passage du rétrécissement de la voie est déterminé,
le rétrécissement de la voie est catégorisé, un rétrécissement de la voie étant attribué à une première catégorie lorsqu'il ne comprend que des limites statiques (7) et à une deuxième catégorie lorsqu'il comprend des limites dynamiques (8),
**caractérisé en ce que**
lors de l'approche du rétrécissement de la voie et/ou lors du passage du rétrécissement de la voie, pour assister le conducteur du véhicule (1), un premier élément graphique (9, 16) pour le rétrécissement de la voie et, par rapport à celui-ci, un deuxième élément graphique (10) pour le véhicule (1) sont affichés, le type de représentation du premier et/ou du deuxième élément graphique (9, 16, 10) étant différent en fonction de la catégorie du rétrécissement de la voie déterminée et le type de représentation étant en outre différent en fonction du fait que le rétrécissement de la voie n'a pas encore été atteint ou que le véhicule (1) se trouve déjà dans le passage du rétrécissement de la voie.

2. Procédé selon la revendication 1,
**caractérisé en ce que**
au moyen de l'unité de capteur (2), la largeur de passage du rétrécissement de la voie est déterminée et, au moyen des premier et deuxième éléments graphiques (9, 16, 10), la largeur de passage du rétrécissement de la voie par rapport au véhicule (1) est représentée.

3. Procédé selon la revendication 1 ou 2,
**caractérisé en ce que**
pour un rétrécissement de la voie de la première catégorie, des limites statiques (7) qui rétrécissent la voie sont déterminées d'un côté ou des deux côtés et le premier et le deuxième élément graphique (9, 10) sont représentés de sorte que la distance du véhicule (1) par rapport au début du rétrécissement de la voie et la position transversale du véhicule (1) par rapport aux limites statiques (7) du rétrécissement de la voie sont reconnaissables.

4. Procédé selon l'une quelconque des revendications précédentes,
**caractérisé en ce que**
le premier élément graphique (9, 16) comprend des aides à l'orientation (12, 19), qui indiquent un prolongement du deuxième élément graphique (10) du véhicule dans le premier élément graphique (9, 16) du rétrécissement de la voie et/ou indiquent un prolongement du premier élément graphique (9, 16) du rétrécissement de la voie en direction du deuxième élément graphique (10) du véhicule (1).

5. Procédé selon l'une quelconque des revendications précédentes,
**caractérisé en ce que**
des deux côtés adjacents au deuxième élément graphique (10), des éléments de guidage transversal (13) sont indiqués, qui permettent de visualiser la distance latérale du véhicule (1) par rapport aux limites latérales de la voie (6) ou du rétrécissement de voie dans le sens de déplacement.

6. Procédé selon l'une quelconque des revendications précédentes,
**caractérisé en ce que**
pour un rétrécissement de voie de la deuxième catégorie, des limites statiques et dynamiques (7, 8) de la voie (6) sont déterminées et, sur le premier élément graphique (16), les limites statiques (7) sont représentées différemment des limites dynamiques (8).

7. Procédé selon la revendication 6,
**caractérisé en ce que**
la position d'une limite dynamique (8) dans le sens de déplacement est déterminée en continu et la représentation du premier et/ou du deuxième élément graphique (16, 10) est adaptée en continu à la position relative du véhicule (1) par rapport à la limite dynamique (8).

8. Procédé selon la revendication 6 ou 7,
**caractérisé en ce que**
pour un rétrécissement de la voie de la deuxième catégorie, en plus de la représentation, effectuée comme pour un rétrécissement de la voie de la première catégorie, une indication (17) de la largeur du rétrécissement de la voie par rapport à la largeur du véhicule (1) est affichée.

9. Procédé selon la revendication 8,
**caractérisé en ce que**
l'indication (17) représente la différence entre la largeur du rétrécissement de la voie et la largeur du véhicule (1).

10. Procédé selon l'une quelconque des revendications précédentes,
**caractérisé en ce que**
pour un rétrécissement de la voie de la deuxième catégorie, l'indication (17) de la largeur du rétrécissement de la voie dans le sens de déplacement est affichée par rapport à la largeur du véhicule (1), lorsqu'il est déterminé que le véhicule n'a pas encore atteint le rétrécissement de la voie.

11. Procédé selon l'une quelconque des revendications précédentes,
**caractérisé en ce que**
pour un rétrécissement de la voie de la deuxième catégorie, l'indication (17) de la largeur du rétrécissement de la voie d'une section déjà passée du rétrécissement de la voie est affichée par rapport à la largeur du véhicule (1), lorsqu'il est déterminé que le véhicule (1) se trouve déjà dans le passage du rétrécissement de la voie.

12. Procédé selon l'une quelconque des revendications précédentes,
**caractérisé en ce que**
la distance par rapport à la fin du rétrécissement de la voie est affichée lorsqu'il est déterminé que le véhicule se trouve déjà dans le passage du rétrécissement de la voie.

13. Système d'assistance à un conducteur pour assister un conducteur d'un véhicule (1) lors du passage d'un rétrécissement de la voie, comprenant
une unité de capteur (2) permettant de déterminer le rétrécissement de la voie dans le sens de déplacement du véhicule (1) et le fait que le véhicule (1) a déjà atteint le rétrécissement de la voie ou que le véhicule (1) se trouve déjà dans le passage du rétrécissement de la voie,
une unité d'analyse (3) permettant de catégoriser le rétrécissement de la voie, un rétrécissement de la voie étant attribué à une première catégorie lorsqu'il ne comprend que des limites statiques (7) et à une deuxième catégorie lorsqu'il comprend des limites dynamiques (8),
**caractérisé par**
un dispositif d'affichage (4), qui est conçu pour créer des données graphiques, qui, lors de l'approche du rétrécissement de la voie et/ou lors du passage du rétrécissement de la voie, pour assister le conducteur du véhicule (1), affichent un premier élément graphique (9, 16) pour le rétrécissement de la voie et un deuxième élément graphique (10) pour le véhicule (1), le type de représentation du premier élément graphique (9, 16) et/ou du deuxième élément graphique (10) étant différent en fonction de la catégorie du rétrécissement de la voie déterminée et le type de représentation étant en outre différent en fonction du fait que le rétrécissement de la voie n'a pas encore été atteint ou que le véhicule (1) se trouve déjà dans le passage du rétrécissement de la voie.

14. Système d'assistance à un conducteur selon la revendication 13,
**caractérisé en ce que**
l'unité de capteur (2) comprend une caméra et le dispositif d'affichage (5) permet de superposer au moins le premier élément graphique (9, 16) sur l'image enregistrée par la caméra.
